# FASCICULE DE BREVET EUROPEEN

(11) **EP 1 241 681 B1**
(45) Date de publication et mention de la délivrance du brevet: **24.05.2006**
(21) Numéro de dépôt: 02290338.9
(22) Date de dépôt: 12.02.2002
(51) Int. Cl.: G21C 15/243

(54) **Procédé de réparation du joint labyrinthe d'un diffuseur d'une pompe primaire d'une centrale nucléaire**
Verfahren zur Wiederherstellung der Labyrinthdichtung eines Leitrads in einer Kühlmittelpumpe eines Kernkraftwerks
Method for repairing the labyrinth seal of the diffuser of a nuclear plant coolant pump

(30) Priorité: 12.03.2001 FR 0103336
(43) Date de publication de la demande: 18.09.2002
(73) Titulaire: JEUMONT S.A., 92400 Courbevoie (FR)
(72) Inventeur: Mazuy, Louis, 59600 Maubeuge (FR)
(74) Mandataire: Jacobson, Claude

(56) Documents cités:
- EP-A- 0 817 205
- DE-A- 3 111 442
- FR-A- 2 647 854
- PATENT ABSTRACTS OF JAPAN vol. 018, no. 408 (M-1647), 29 juillet 1994 (1994-07-29) & JP 06 117394 A (ISHIKAWAJIMA HARIMA HEAVY IND CO LTD), 26 avril 1994 (1994-04-26)
- DATABASE WPI Section Ch, Week 198519 Derwent Publications Ltd., London, GB; Class K05, AN 1985-112875 XP002179713 & JP 60 053891 A (HITACHI LTD), 27 mars 1985 (1985-03-27)

## Description

La présente invention concerne un procédé de réparation du joint labyrinthe d'un diffuseur d'une pompe primaire de centrale nucléaire.

Les pompes primaires de centrale nucléaire comprennent un arbre d'entraînement en rotation d'une roue et au-dessus de ladite roue et concentriquement audit arbre, un échangeur de chaleur formant une barrière thermique, un couvercle de barrière thermique comportant une jupe périphérique munie à sa base d'une couronne s'étendant au-dessous de l'échangeur de chaleur et un diffuseur de pompe comportant une jupe périphérique concentrique à ladite jupe périphérique du couvercle de barrière technique et munie à sa base d'un fond circulaire s'étendant au-dessous de la couronne dudit corps.

Ce type de pompe primaire comprend également un anneau appelé anneau de labyrinthe disposé entre l'échangeur de chaleur et l'arbre, ainsi qu'un corps sur lequel sont fixés l'échangeur de chaleur et la jupe périphérique du couvercle de barrière thermique. Ce corps est relié au couvercle de barrière thermique par des éléments de liaison.

De plus, le fond circulaire du diffuseur comporte un alésage central de passage de l'arbre muni d'une succession d'anneaux circonférenciels et superposés formant un joint à lèvres du type labyrinthe.

- Ce joint labyrinthe est donc ménagé dans une pièce massive et le fond circulaire du diffuseur portant ledit joint labyrinthe est disposé dans une zone de transition entre l'eau chaude du circuit primaire qui est à une température de l'ordre de 300°C et la zone refroidie de la pompe qui est à une température d'environ 40°C.

Le fond circulaire du diffuseur et de ce fait le joint labyrinthe sont soumis à un important gradient thermique qui favorise la formation de fissures de fatigue thermique sur les lèvres de ce joint.

L'invention a donc pour objet un procédé de réparation du joint labyrinthe d'un diffuseur d'une pompe primaire de centrale nucléaire, ledit diffuseur comprenant une jupe périphérique munie à sa base d'un fond circulaire comportant un orifice pourvu dudit joint labyrinthe, caractérisé en ce qu'il consiste:
- à réaliser sur le fond circulaire un alésage de plus grand diamètre que l'orifice pour retirer une portion centrale du fond et éliminer le joint labyrinthe,
- à réduire, à proximité de l'alésage, l'épaisseur de la portion restante du fond,
- à former sur le bord d'alésage un chanfrein,
- à positionner au niveau dudit alésage une pièce de remplacement comportant un orifice central, le bord périphérique de cette pièce étant pourvu d'un chanfrein,
- à réaliser au niveau des deux chanfreins un cordon de soudure continu et étanche,
- à araser les bourrelets du cordon de soudure, et
- à réaliser dans l'orifice central de la pièce de remplacement des lèvres formant un nouveau joint labyrinthe.

Selon d'autres caractéristiques de l'invention :
- l'axe de symétrie des chanfreins de la portion restante du fond circulaire et de la pièce de remplacement est parallèle à l'axe de l'orifice central,
- l'axe de symétrie des chanfreins de la portion restante du fond circulaire et de la pièce de remplacement forme avec l'axe de l'orifice central un angle aigu dont le sommet est situé au-dessous dudit fond circulaire,
- la face inférieure de la pièce de remplacement est située sensiblement dans le même plan que la face inférieure du fond circulaire du diffuseur,
- la face inférieure de la pièce de remplacement est située au-dessus de la face inférieure du fond circulaire du diffuseur.

Les caractéristiques et avantages de l'invention apparaîtront au cours de la description qui va suivre, donnée à titre d'exemple et faite en référence aux dessins annexés, sur lesquels :
- la Fig. 1 est une demi-vue schématique en coupe axiale d'une partie d'une pompe primaire de centrale nucléaire,
- les Figs. 2 à 4 sont des demi-vues en coupe axiale du fond circulaire du diffuseur montrant les différentes étapes du procédé de réparation conforme à l'invention.

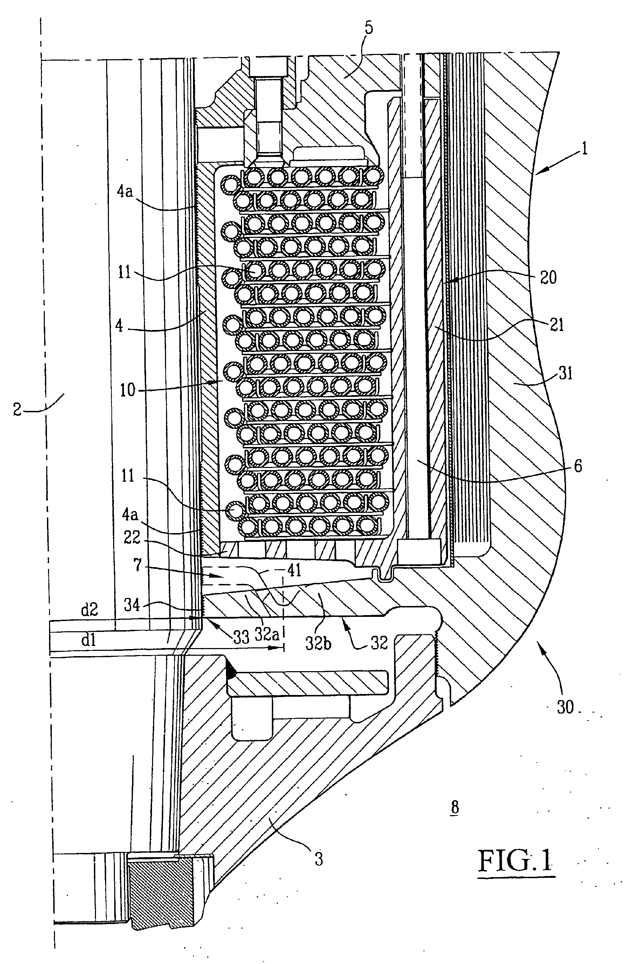

Sur la Fig. 1, on a représenté schématiquement une partie d'une pompe primaire d'une centrale nucléaire et qui est une pompe du type hélicocentrifuge à un étage, à aspiration verticale et refoulement horizontal.

- Cette pompe désignée par la référence 1 comprend un arbre 2 d'entraînement en rotation d'une roue 3 fixée par des moyens appropriés à la base dudit arbre 2. Cette pompe 1 comprend également, au-dessus de la roue 3 et concentriquement à l'arbre 2, un échangeur de chaleur 10 formant une barrière thermique, un couvercle de barrière thermique 20 et un diffuseur 30.

L'échangeur de chaleur 10 est composé d'une multitude de tubes 11 concentriques et répartis selon des nappes superposées et un anneau 4 est disposé entre l'arbre 2 et l'échangeur de chaleur 10.

Cet anneau 4 comporte intérieurement, respectivement à sa partie supérieure et à sa partie inférieure, un joint mécanique 4a de type labyrinthe.

Le couvercle de barrière thermique 20 est formé par une jupe périphérique 21 s'étendant sur toute la hauteur de l'échangeur de chaleur 10 et munie à sa base d'une couronne circulaire 22 s'étendant au-dessous dudit échangeur de chaleur 10.

Le diffuseur 30 est formé par une jupe périphérique 31 entourant la jupe périphérique 21 du couvercle de barrière thermique 20 et munie à sa base d'un fond circulaire 32 s'étendant au-dessous de la couronne 22 dudit couvercle de barrière thermique 20.

La pompe primaire 1 comprend également un corps 5 sur lequel sont fixés l'échangéur de chaleur 10 et la jupe périphérique 21 du couvercle de barrière thermique 20.

La jupe 21 du couvercle de barrière thermique 20 est fixée sur le corps 5 par des éléments de liaison 6 constitués par exemple par des goujons.

Ainsi que représenté à la Fig. 1, la couronne 22 du corps de barrière thermique 20 ménage avec le fond circulaire 32 du diffuseur 30 une chambre inférieure d'eau froide désignée dans son ensemble par la référence 7.

Le fond circulaire 32 du diffuseur 30 est pourvu d'un orifice 33 de passage de l'arbre 2 et qui comporte une succession d'anneaux circonférenciels et superposés formant un joint à lèvres également appelé joint labyrinthe 34.

De manière classique, la roue 3 solidaire en rotation de l'arbre 2 aspire le fluide du circuit primaire et ce fluide est évacué par un orifice de refoulement 8 dont une partie est représentée sur la figure 1 et qui est situé sur le côté du diffuseur 30.

Ce diffuseur 30 est donc au contact avec le fluide du circuit primaire qui est à une température de l'ordre de 300°C. Ainsi, le fond circulaire 32 du diffuseur 30 comportant le joint labyrinthe 34 est disposé dans une zone de transition entre l'eau chaude du circuit primaire qui est à la température d'environ de 300°C et la zone refroidie de la pompe qui est à une température d'environ 40°C. De ce fait, ce fond circulaire 32 et par conséquent le joint labyrinthe 34 sont soumis à un important gradient thermique qui favorise la formation de fissures de fatigue thermique sur les anneaux de ce joint.

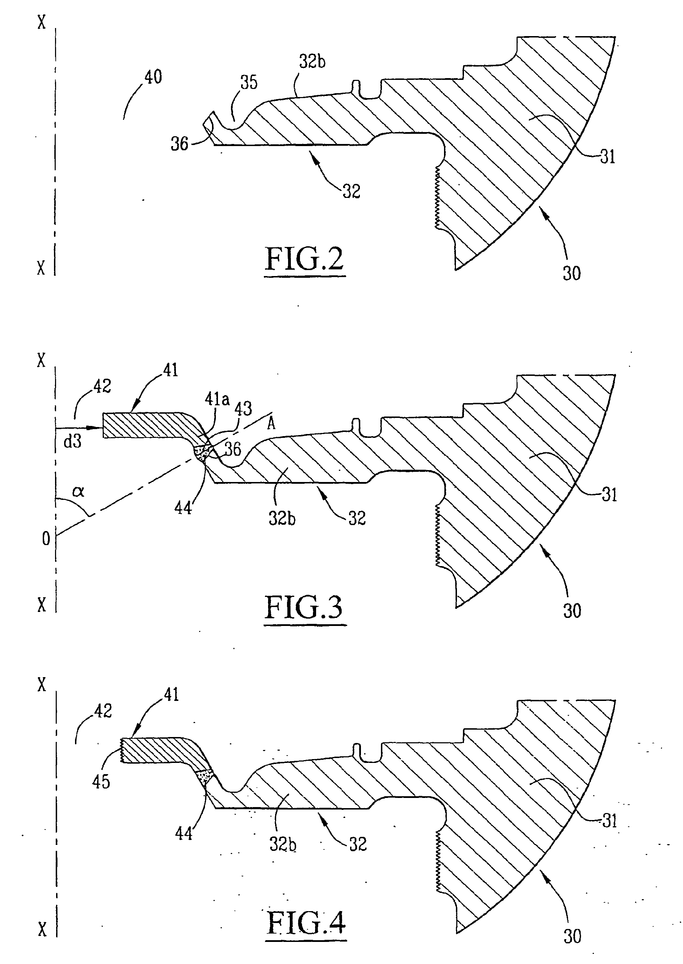

Pour remplacer ce joint labyrinthe 34, le procédé selon l'invention consiste donc à réaliser sur le fond circulaire 32 du diffuseur 30, un alésage 40 (Fig. 2) de diamètre d1 supérieur au diamètre d2 de l'orifice 33 pour retirer une portion centrale 32a dudit fond circulaire 32 et éliminer le joint labyrinthe 34 fissuré.

Ensuite, par une opération d'usinage approprié, on réduit, à proximité de l'alésage 40, l'épaisseur de la portion restante 32b du fond 32 en formant par exemple une gorge 35 dont la géométrie est déterminée afin d'abaisser le facteur d'intensité des contraintes thermomécaniques dans le fond 32 du diffuseur 30.

Après cette opération d'usinage, on forme sur le bord de l'alésage 40 un chanfrein 36, ainsi que représenté à la Fig. 2.

Comme représenté à la Fig. 3, une pièce de remplacement 41 est positionnée au niveau de l'alésage 40 et cette pièce de remplacement 41 comporte un orifice central 42 dont le diamètre d3 correspond sensiblement au diamètre d2 de l'orifice 33 de la portion centrale 32a précédemment enlevée.

Le bord périphérique 41a de cette pièce de remplacement 41 est également pourvu d'un chanfrein 43.

Ainsi que représenté à la Fig. 3, l'axe de symétrie A des chanfreins 36 et 43 forme avec l'axe XX de l'orifice central 42 un angle aigu α dont le sommet O est situé au-dessous du fond circulaire 32 du diffuseur 30, comme représenté à la Fig. 3.

Selon une variante, l'axe de symétrie A des chanfreins 36 et 43 peut être parallèle à l'axe XX de l'orifice central 42.

Après avoir positionné cette pièce de remplacement 41 de telle manière que le chanfrein 43 soit placé en vis à vis du chanfrein 36 de la portion restante 32b du fond 32, on réalise au niveau de ces deux chanfreins un cordon de soudure 44 continu et étanche, ainsi que représenté à la Fig. 3.

Le cordon de soudure 44 est réalisé par exemple par un procédé TIG automatisé ou par soudage avec éléctrode ou par tout autre procédé de soudage.

Ensuite, on arase les bourrelets supérieur et inférieur du cordon de soudure 44 et on contrôle ce cordon de soudure par un contrôle non destructif par exemple par ultrasons.

Enfin, on réalise sur le bord interne de l'orifice central 42 de la pièce de remplacement 41 des lèvres 45 formant un nouveau joint labyrinthe, comme représenté à la Fig. 4.

La forme géométrique de la pièce de remplacement 41 est déterminée pour que la face inférieure soit située au-dessus de la face inférieure du fond circulaire 32 du diffuseur 30.

Selon une variante, la face inférieure de la pièce de remplacement 41 est située sensiblement dans le même plan que la face inférieure du fond circulaire 32 du diffuseur 30.

D'une manière générale, le procédé de soudure pour former le cordon de soudure 44 est choisi de façon à minimiser la déformation dans le diffuseur 30.

L'ensemble des différentes opérations de réparation du joint sont réalisées en milieu confiné.

De plus, la nouvelle géométrie de la portion 41 sur laquelle est réalisé le nouveau joint labyrinthe permet d'abaisser le facteur d'intensité des contraintes grâce à une modification du champ des contraintes thermomécaniques.

Cette géométrie permet également de transformer une partie des contraintes en une déformation n'entraînant aucun inconvénient pour le bon fonctionnement de la pompe primaire.

Cette modification permet de réduire les risques de formation de fissures sur les lèvres du joint labyrinthe.

## Revendications

1. Procédé de réparation du joint labyrinthe d'un diffuseur (30) d'une pompe primaire (1) de centrale nucléaire, ledit diffuseur (30) comprenant une jupe périphérique (31) munie à sa base d'un fond circulaire (32) comportant un orifice (33) pourvu dudit joint labyrinthe, **caractérisé en ce qu'**il consiste :
- à réaliser sur le fond circulaire un alésage (40) de plus grand diamètre que l'orifice (33) pour retirer une portion centrale (32a) du fond (32) et éliminer le joint labyrinthe,
- à réduire, à proximité de l'alésage (40), l'épaisseur de la portion restante (32b) du fond (32),
- à former sur le bord de l'alésage (40), un chanfrein (36),
- à positionner au niveau dudit alésage (40) une pièce de remplacement (41) comportant un orifice central (42), le bord périphérique de cette pièce (41) étant pourvu d'un chanfrein (43),
- à réaliser au niveau des deux chanfreins (36 ; 43) un cordon de soudure (44) continu et étanche,
- à araser les bourrelets du cordon de soudure (44), et
- à réaliser dans l'orifice central (42) de la pièce de remplacement (41) des lèvres formant un nouveau joint labyrinthe.

2. Procédé selon la revendication 1, **caractérisé en ce que** l'axe de symétrie des chanfreins (36 ; 43) de la portion restante (32b) du fond circulaire (32) et de la pièce de remplacement (41) est parallèle à l'axe de l'orifice central (42).

3. Procédé selon la revendication 1, **caractérisé en ce que** l'axe de symétrie des chanfreins (36 ; 43) de la portion restante (32b) du fond circulaire (32) et de la pièce de remplacement (41) forme avec l'axe de l'orifice central (42) un angle aigu dont le sommet est situé au-dessous dudit fond circulaire (32).

4. Procédé selon l'une quelconque des revendications 1 à 3, **caractérisé en ce que** la face inférieure de la pièce de remplacement (41) est située sensiblement dans le même plan que la face inférieure du fond circulaire (32) du diffuseur (30).

5. Procédé selon l'une quelconque des revendications 1 à 3, **caractérisé en ce que** la face inférieure de la pièce de remplacement (41) est située au-dessus de la face inférieure du fond circulaire (32) du diffuseur (30).

## Claims

1. Method for repairing the labyrinth seal of a diffuser (30) of a primary pump (1) of a nuclear power station, the said diffuser (30) including a peripheral skirt (31) fitted at its base with a circular bottom (32) which has an opening (33) provided with the said labyrinth seal, **characterised in that** it consists in:
- making on the circular bottom a bore (40), larger in diameter than the opening (33) in order to withdraw a centre portion (32a) of the bottom (32) and get rid of the labyrinth seal;
- reducing, in the vicinity of the bore (40), the thickness of the remaining portion (32b) of the bottom (32);
- forming a chamfer (36) on the edge of the bore (40);
- positioning at the level of the said bore (40) a replacement part (41) with a centre opening (42), the peripheral edge of this component (41) being provided with a chamfer (43);
- making, at the level of the two chamfers (36; 43) a continuous and sealing fillet weld (44);
- levelling off the beads of the fillet weld (44), and
- making, in the centre opening (42) of the replacement part (41), lips which form a new labyrinth seal.

2. Method according to Claim 1, **characterised in that** the axis of symmetry of the chamfers (36, 43) of the remaining portion (32b) of the circular bottom (32) and of the replacement part (41) is parallel to the centreline of the centre opening (42).

3. Method according to Claim 1, **characterised in that** the axis of symmetry of the chamfers (36; 43) of the remaining portion (32b) of the circular bottom (32) and of the replacement part (41) forms with the centreline of the centre opening (42) an acute angle, the vertex of which is located below the said circular bottom (32).

4. Method according to any one of the Claims 1 to 3, **characterised in that** the lower face of the replacement part (41) is located more or less in the same plane as the lower face of the circular bottom (32) of the diffuser 30).

5. Method according to any one of the Claims 1 to 3, **characterised in that** the lower face of the replacement part (41) is located above the lower face of the circular bottom (32) of the diffuser (30).

## Patentansprüche

1. Verfahren zur Wiederherstellung der Labyrinthdichtung eines Leitrads (30) einer Primärpumpe (1) eines Kernkraftwerks, wobei das genannte Leitrad (30) eine periphere Verkleidung (31) umfasst, die in ihrem Unterteil einen kreisförmigen Boden (32) mit einer Öffnung (33) aufweist, die mit der genannten Labyrinthdichtung versehen ist,
**dadurch gekennzeichnet, dass** es darin besteht:
- in dem kreisförmigen Boden (32) eine Bohrung (40) mit einem größeren Durchmesser als dem der Öffnung (33) zu realisieren, um einen zentralen Teil (32a) des Bodens (32) zu entfernen und die Labyrinthdichtung zu eliminieren,
- in der Umgebung der Bohrung (40) die Dicke des restlichen Teils (32b) des Bodens (32) zu reduzieren,
- an dem Rand der Bohrung (40) eine Fase (6) auszubilden,
- in Höhe der genannten Bohrung (40) ein Ersatzstück (41) mit einer zentralen Öffnung (42) zu positionieren, wobei der periphere Rand dieses Stücks (41) eine Fase (43) aufweist,
- in Höhe der beiden Fasen (36 ; 43) eine durchgehende und dichte Schweißnaht zu realisieren,
- die Wülste der Schweißnaht (44) abzuschleifen, und
- in der zentralen Öffnung (42) des Ersatzstücks (41) Lippen zu realisieren, die eine neue Labyrinthdichtung bilden.

2. Verfahren nach Anspruch 1, **dadurch gekennzeichnet, dass** die Symmetrieachse der Fasen (36 ; 43) des restlichen Teils (32b) des kreisförmigen Bodens (32) des Ersatzstücks (41) parallel ist zu der Achse der zentralen Öffnung (42).

3. Verfahren nach Anspruch 1, **dadurch gekennzeichnet, dass** die Symmetrieachse der Fasen (36 ; 43) des restlichen Teils (32b) des kreisförmigen Bodens (32) des Ersatzstücks (41) mit der Achse der zentralen Öffnung (42) einen spitzen Winkel bildet, dessen Spitze sich unterhalb des genannten kreisförmigen Bodens (32) befindet.

4. Verfahren nach einem der Ansprüche 1 bis 3, **dadurch gekennzeichnet, dass** die Unterseite des Ersatzstücks (41) sich im Wesentlichen in derselben Ebene befindet wie die Unterseite des kreisförmigen Bodens (32) des Leitrads (30).

5. Verfahren nach einem der Ansprüche 1 bis 3, **dadurch gekennzeichnet, dass** die Unterseite des Ersatzstücks (41) sich oberhalb der Unterseite des kreisförmigen Bodens (32) des Leitrads (30) befindet.
